# FASCICULE DE BREVET EUROPEEN

(11) **EP 0 658 845 B1**
(45) Date de publication et mention de la délivrance du brevet: **16.09.1998**
(21) Numéro de dépôt: 94402700.2
(22) Date de dépôt: 25.11.1994
(51) Int. Cl.: G06F 11/16

(54) **Méthode et dispositif pour mémoriser des données transactionnelles**
Verfahren und Einrichtung zum Speichern von Transaktionsdaten
Method and apparatus to store transaction data

(30) Priorité: 10.12.1993 FR 9314965
(43) Date de publication de la demande: 21.06.1995
(73) Titulaire: SOCETEC, F-93513 Montreuil Cédex (FR); INSTITUT FRANCAIS DU PETROLE, 92506 Rueil-Malmaison (FR)
(72) Inventeur: Gillard, Patrick, F-91100 Corbeil Essonnes (FR); Gonzalez, Pierre, F-92500 Rueil-Malmaison (FR)
(74) Mandataire: Coadour, Jean

(56) Documents cités:
- WO-A-89/11134
- FR-A- 2 642 197

## Description

La présente invention a pour objet une méthode et un dispositif pour mémoriser des données transactionnelles permettant de simplifier leur saisie et leur gestion à distance, telles que par exemple des valeurs mesurées par des appareils de mesure associés à des moyens locaux de validation agréés.

La méthode et le dispositif selon l'invention s'appliquent notamment pour le stockage de données à caractère transactionnel, par référence à des unités de mesure légales, par exemple, pour des mesures issues d'équipements de comptage volumétrique, de pesage etc, pour remplacer des imprimantes sécurisées, et d'une manière générale, pour tout équipement nécessitant une mémorisation de haute fiabilité.

Dans des stations de desserte telles que des gares routières, des dépôts, des ports par exemple où l'on transfère sur des véhicules routiers, sur des navires etc, des quantités plus ou moins importantes de liquides tels que des produits pétroliers par exemple, en vue de leur distribution, ou bien encore dans des stations en tête d'oléoducs par exemple, on dispose généralement d'ensembles locaux de mesure et d'affichage des quantités délivrées. De tels ensembles comportent des compteurs ou des turbines, des capteurs de température, des afficheurs de quantité et un module électronique adapté éventuellement à faire des corrections d'échelle et de température,. Par des voies de transmission, le module électronique local est connecté avec un ensemble de calcul et de gestion dans une salle de contrôle à distance, où elles sont mémorisées avant leur exploitation.

Les indications des moyens de mesurage (compteurs, turbines etc) devant être exactes et incontestables, l'ensemble local de mesure est généralement associé à un boitier local de contrôle de vérification dont le fabricant est agréé par l'administration responsable.

La mémorisation est effectuée à l'heure actuelle sur des supports de mémorisation tels que des disques ou disquettes magnétiques ou bien des mémoires électroniques non volatiles à haute densité sous la forme par exemple de cartes au standard PCMCIA/JEIDA (format cartes de crédit). Ces cartes utilisent soit des mémoires sauvegardées par pile intégrée, soit des EEPROM de type "flash" (mémoires ne nécessitant pas d'alimentation de sauvegarde). La fiabilité des mémoires à circuits intégrés est généralement bonne. On ne peut toutefois leur accorder une totale confiance. et avoir la certitude, dans la pratique, que les données stockées correspondent effectivement d'une part aux données écrites et d'autre part aux données relues.

En outre, pour que la garantie des mesures s'applique, il est nécessaire que l'on place dans cette salle de contrôle une unité de stockage ayant une fiabilité éprouvée. Cette unité qui comporte généralement des moyens de mémorisation tels qu'une imprimante sécurisée ou bien encore des supports magnétiques sécurisés, associés à des moyens informatiques de commande tels qu'un micro-ordinateur, doit faire l'objet d'un agrément officiel et à cette fin, doivent être accessibles aux contrôles par les organismes officiels.

La méthode selon l'invention permet de simplifier la saisie et la mémorisation de données transactionnelles élaborées à partir de mesures faites par des moyens de mesurage (et relatives notamment à des livraisons de fluides dans des stations de desserte), ceci en évitant les inconvénients ci-dessus mentionnés.

Elle est caractérisée en ce qu'elle comporte la mémorisation locale sécurisée des données par adjonction locale aux moyens de mesurage d'au moins un ensemble local de traitement comportant un processeur de pilotage, des moyens de stockage comprenant plusieurs unités locales de mémorisation et des moyens de contrôle adaptés à gérer sur commande du processeur de pilotage, la mémorisation de valeurs de mesure validées, et à contrôler des échanges de données entre les différentes unités locales de mémorisation, de façon à concentrer en un même lieu l'ensemble des moyens nécessaires à l'acquisition et la mémorisation sécurisée des données transactionnelles.

La méthode peut comporter en outre le transfert à distance des données sécurisées et mémorisées sur requête de moyens de gestion de ces transactions.

Cette mémorisation sécurisée des données transactionnelles comporte de préférence une duplication de ces données par les moyens de stockage, et des contrôles des échanges entre les différentes unités locales de mémorisation.

La méthode comporte par exemple la mise en communication du processeur de pilotage avec les moyens de contrôle par l'intermédiaire d'une voie de transmission sécurisée.

Les moyens de contrôle peuvent être aussi associés directement au processeur de pilotage.

La méthode selon l'invention est avantageuse en ce qu'elle permet de restreindre la zone où s'exercent normalement les contrôles de validation de mesure, car les moyens pour stocker les données et les garantir sont installés de préférence au lieu même d'implantation des appareils de mesurage et de validation utilisés ou à son voisinage immédiat, par exemple dans un même boitier accessible depuis l'extérieur pour la lecture des données transactionnelles mémorisées. Du fait de cette organisation, il n'est plus néccessaire comme précédemment, d'avoir une unité de stockage agréée au lieu de gestion informatique des stations de desserte.

La garantie que les mesures acquises et mémorisées localement sont bien conformes aux valeurs originales mesurées est obtenue essentiellement :
- par une duplication en permanence des données à conserver,
- par l'utilisation d'une mémoire sauvegardée pour mémoriser des transferts en cours et aussi, de préférence d'un organe de contrôle de l'alimentation; et
- par un ensemble de contrôles pour vérifier qu'aucune erreur de transmission ne se produit au cours que chaque transfert d'information entre les différentes unités de mémorisation et le processeur de pilotage.

Le dispositif selon l'invention est caractérisé en ce qu'il comporte au moins un ensemble local de traitement associé directement aux moyens de mesurage et constitué d'au moins un processeur de pilotage comprenant des moyens d'acquisition et de validation des données mesurées, au moins un module local de mémorisation des données validées comprenant plusieurs unités de mémorisation et des moyens de contrôle qui sont adaptés à piloter sur commande du processeur de pilotage, la mémorisation de valeurs de mesure validées, et à contrôler les échanges de données entre les différentes unités locale de mémorisation de façon que les valeurs accessibles depuis l'extérieur de l'ensemble de traitement lors d'une lecture dudit au moins un module local de mémorisation, soient conformes aux valeurs effectivement mesurées.

Suivant un mode de réalisation, chaque module de mémorisation comporte par exemple une première et une deuxième unité de stockage (des mémoires de type statique non volatiles par exemple), les moyens de contrôle étant adaptés à commander la mémorisation de valeurs de mesure validées dans la première unité de stockage et pour dupliquer lesdites valeurs dans la deuxième unité de stockage, une mémoire sauvegardée pour mémoriser tout transfert en cours entre les moyens de contrôle et le processeur de pilotage et une mémoire-tampon pour les échanges entre le processeur de pilotage et le module de mémorisation, lesdits moyens de contrôle étant adaptés à contrôler des échanges de données entre les différentes unités de mémorisation.

Suivant un mode de réalisation, la mémoire-tampon comporte par exemple une première zone pour l'écriture de requêtes émanant du processeur de pilotage et des compte-rendus d'exécution émanant des moyens de contrôle, et une deuxième zone pour l'écriture de données échangées entre le processeur de pilotage et lesdits moyens de contrôle.

Le dispositif peut comporter aussi des moyens pour tester le bon fonctionnement d'une source d'alimentation extérieure et des moyens de contrôle.

La deuxième unité de stockage est par exemple une mémoire de duplication des données dans la première unité de stockage, les moyens de contrôle étant adaptés à contrôler l'identité des données validées dans les deux unités.

De préférence la mémoire sauvegardée comporte une zone pour des données néccessaires au contrôle des unités de stockage.

Suivant un mode de réalisation, les moyens de contrôle sont reliés au processeur de pilotage par une voie de liaison sécurisée ou bien encore incorporés à lui.

Suivant un autre mode de réalisation, le dispositif comporte plusieurs processeurs de pilotage associés respectivement à plusieurs ensembles de mesure et partageant au moins un ensemble de mémorisation.

D'autres caractéristiques et avantages de la méthode et du dispositif selon l'invention, apparaîtront à la lecture de la description ci-après de modes de réalisation décrits à titre d'exemples non limitatifs, en se référant aux dessins annexés où:
- la Fig.1 montre schématiquement un premier mode d'organisation du dispositif;
- la Fig.2 montre schématiquement l'organisation de chaque unité de stockage des mesures dans le dispositif;
- la Fig.3 montre un autre mode de réalisation où les moyens de contrôle sont associés directement à un processeur de pilotage;
- la Fig.4 montre un deuxième mode d'organisation du dispositif sous la forme d'unités autonomes de mesure; et
- la Fig.5 montre une variante du mode précédent, avec partage local des moyens de stockage entre plusieurs unités de pilotage.

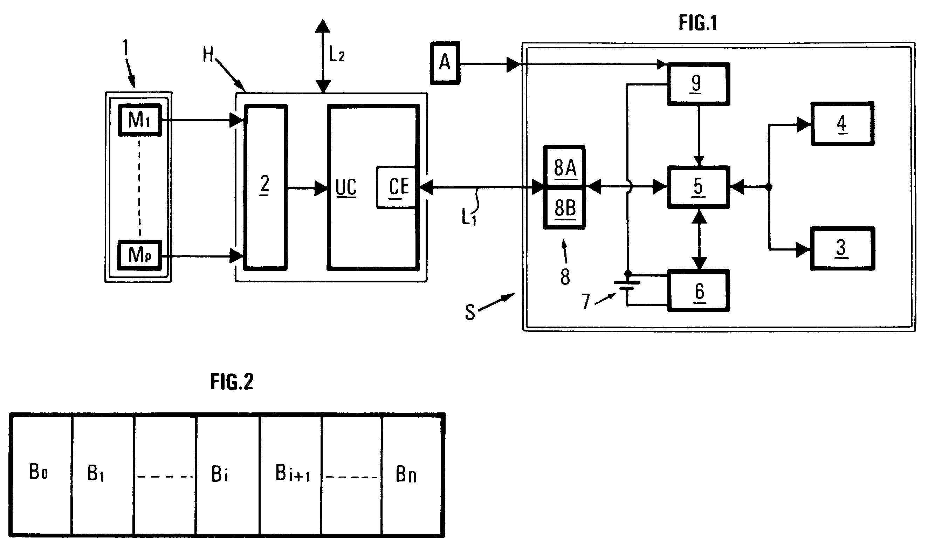

Le dispositif selon l'invention est associé (Fig.1) à un ensemble de mesure 1 comportant un ou plusieurs appareils M1 ... Mp d'un type connu qui sont regroupés. Il peut s'agir de moyens de comptage: turbines, compteurs volumétriques etc, mesurant des volumes de produits ou substances liquides ou solides qui font l'objet de transactions, de capteurs de température ou de pression, de densimètres, de viscosimètres etc.

Les mesures effectuées devant être dignes de foi, on associe localement aux appareils de mesure 1 un ensemble de traitement et de mémorisation sécurisée sur lequel s'applique les contrôles effectués par les administrations officielles chargées de la vérifications des poids et mesures.

Le dispositif selon l'invention est agencé pour enregistrer et restituer sans erreur, à un système extérieur qui le sollicite, des valeurs mesurées et mémorisées à la suite d'une série de contrôles pour en vérifier l'exactitude.

Il comporte un ensemble S de mémorisation sécurisée connecté par une liaison sécurisée L1 avec un processeur de pilotage H. Celui-ci comporte une carte d'acquisition 2 et une unité centrale UC programmée pour élaborer des mesures valides mises à l'échelle, à partir des signaux analogiques ou impulsionnels issus des appareils de mesure M1 à Mp.

Le processeur de pilotage comporte également une unité CE de gestion des alarmes et de contrôle des échanges, qui est connectée à la ligne L1. L'unité centrale peut être également reliée par une voie de transmission L2 avec une salle de gestion des transactions à distance.

Le module de mémorisation sécurisé S comporte deux unités de stockage ou de mémorisation 3, 4 d'un type statique ne nécessitant pas d'alimentation de sauvegarde, ci-après désignées encore simplement par "mémoires". La première unité (ou mémoire principale) 3 reçoit les valeurs mesurées à enregistrer. La seconde unité (ou mémoire secondaire) 4 est connectée, de façon à dupliquer après contrôle les données introduites dans la première.

Selon les besoins, la capacité des unités de stockage peut être choisie entre 256 Kilo-octets (Ko) et 64 Mo par exemple. De préférence la capacité de la seconde unité est choisie supérieure à celle de la première.

Les deux unités de stockage 3, 4 sont sous le contrôle d'un organe de contrôle 5 tel qu'un micro-contrôleur programmé pour gérer les requêtes et contrôler l'état du dispositif en permanence, et ci-après désigné encore par contrôleur.

Le dispositif comporte également une unité de mémorisation annexe 6 sauvegardée par une pile 7 (ou mémoire sauvegardée) et qui est connectée au contrôleur 5. Dans cette unité de mémorisation annexe 6, le contrôleur 5 transfère en permanence la dernière requête qui lui a été adressée ainsi que toutes les données néccessaires à la gestion des unités de mémorisation.

Le dispositif comporte aussi une mémoire-tampon 8 connectée à la ligne L1. Le processeur de pilotage H est disposé localement. Il peut faire partie du même ensemble que le dispositif S par exemple et dans ce cas, on utilise une voie de transmission en mode parallèle. Il peut encore être séparé physiquement du dispositif S bien que restant par exemple dans le même boitier local, et dans ce cas, on utilise de préférence une liaison sécurisée de type MODBUS ® bien connu des spécialistes.

La mémoire-tampon 8 comporte une première zone 8A par où transitent les requêtes émanant du processeur de pilotage H et les comptes-rendus d'exécution qui sont envoyés en retour à l'unité de contrôle C, et une deuxième zone 8B pour les données échangées entre le bloc de contrôle 5 et le processeur de pilotage H.

Le dispositif comporte également un organe 9 de contrôle de l'alimentation électrique délivrée par une source extérieure A. Sa fonction est double. En cas de chute de la tension électrique, il peut, par l'intermédiaire du contrôleur 5, bloquer toute possibilité d'écriture nouvelle dans les unités de mémorisation 3, 4, 6, et d'autre part émettre des signaux d'alerte qui sont transmis alors au processeur de pilotage H. L'organe 9 vérifie en permanence également que le contrôleur 5 est actif.

Les deux unités de mémorisation 3, 4 peuvent être toutes les deux inamovibles mais on peut aussi utiliser si néccessaire une unité de mémorisation principale 3 amovible.

### Fonctionnement

En fonctionnement normal, le dispositif connaît quatre modes :
- écriture d'un enregistrement,
- lecture d'un enregistrement,
- ré-indexation fichier,
- changement de support.

### Mode écriture

Dans ces quatre modes, on suppose le dispositif au repos sous alarme, avec un déroulement de séquence sans défaut. On rappelle que le terme "sémaphore" utilisé ci-après, désigne un signal fonctionnel indiquant à tout instant le type d'opération requise, en cours d'exécution ou achevée.

Les sémaphores suivants peuvent être activés ou désactivés dans la mémoire-tampon 8 soit par le processeur de pilotage soit par contrôleur 5

| **PAR LE PROCESSEUR DE PILOTAGE H** | **PAR LE CONTROLEUR 5** |
|---|---|
| Ecriture de requête | Exécution en cours |
| Requête d'écriture | Exécution terminée |
| Requête de lecture | Compte-rendu d'exécution |
| Requête ré-indexation | Alarme contrôleur |
| Requête formatage | |

Le processeur de pilotage H positionne dans la zone requête 8A de la mémoire-tampon 8 le sémaphore "écriture de requête" et l'enregistrement des données associées à cette requête dans la zone donnée 8B. Lorsque ces données sont en place dans la zone 8B, le sémaphore "requête d'écriture" est positionné par le processeur de pilotage, le sémaphore "écriture de requête" est désactivé et le processeur de pilotage H reste en attente d'un acquittement de bonne exécution de la part du dispositif.

A la détection du sémaphore "requête d'écriture", le contrôleur 5 positionne dans la mémoire-tampon 8 le sémaphore "exécution en cours" et transfère les données précédentes de la zone 8B dans l'unité de mémorisation sauvegardée 6. Il vérifie la bonne exécution de ce transfert en effectuant une sommation de contrôle (dite "checksum") puis en comparant le résultat de celle-ci avec celle figurant dans la zone 8B. En cas d'égalité, le contrôleur 5 compare une à une les données de la zone 8B et celles de la mémoire sauvegardée 6.

Si le contrôle précédent est satisfaisant, le contrôleur 5 vérifie la présence et la conformité des deux unités de mémorisation 3, 4 puis il extrait de la mémoire sauvegardée 6, pour chacune d'elles, le pointeur physique (ce terme désignant le numéro d'ordre courant d'un enregistrement) et le pointeur virtuel ou effectif (ce terme désignant le numéro d'ordre d'un enregistrement effectivement validé). L'écart entre un pointeur physique et le pointeur virtuel correspondant est le nombre d'enregistrements écrits avec erreur(s) et invalidés.

A partir des valeurs de ces pointeurs, le contrôleur 5 commande l'écriture sur la mémoire secondaire 4 et sur la mémoire principale 3, puis il relit chacun des enregistrements et les compare à celui reporté dans la mémoire sauvegardée 6. Si les contrôles sont satisfaisants, les indications des pointeurs sont mises à jour puis rangées dans la mémoire sauvegardée 6. Le contrôleur 5 positionne dans la zone 8A de la mémoire-tampon 8 un nombre V représentant un compte-rendu d'exécution du sémaphore "exécution terminée" (V=1 si le contrôle est positif) et il enlève ou désactive le sémaphore "exécution en cours".

### Mode lecture

Le processeur de pilotage H positionne dans la zone 8A de la mémoire-tampon 8, un sémaphore "écriture de requête" et dans la zone des données 8B, un critère de recherche de certaines mesures requises ainsi que sa position dans un enregistrement. Lorsque les données correspondant au critère de recherche sont transférées dans la zone 8B, le sémaphore "requête de lecture" est positionné et le sémaphore "écriture de requête" est ôté. Le système H reste en attente d'un signal d'acquittement de la part du dispositif.

Quand il détecte le sémaphore "requête d'écriture", le contrôleur 5 positionne dans la zone requête 8A de la mémoire-tampon 8, le sémaphore "exécution en cours" et transfère les données de la zone 8A de celle-ci, dans la mémoire sauvegardée 6.

Pour tester le transfert, il compare une à une les données inscrites dans la zone 8A avec celles inscrites dans la mémoire sauvegardée 6. Si le test est satisfaisant, le contrôleur 5 vérifie la présence et la conformité des enregistrements dans les deux unités de mémorisation 3,4 puis il contrôle et initialise des pointeurs de recherche désignant le premier d'entre eux dans ces mêmes unités.

A partir de ces pointeurs, le contrôleur 5 assure la recherche dans le premier enregistrement, du critère de sélection désigné à l'emplacement prévu à cet effet. S'il n'y a pas coïncidence (s'il ne le trouve pas au même endroit), le pointeur est incrémenté jusqu'à trouver l'enregistrement correspondant validé où ce critère peut être retrouvé.

Cette recherche est effectuée avec comparaison entre les pointeurs de recherche et les pointeurs physiques de dernier enregistrement situés dans la mémoire sauvegardée 6.

Lorsque l'enregistrement correspondant est trouvé dans les deux unités de mémorisation, il est transféré dans la mémoire sauvegardée 6. Après lecture, le contrôleur 5 compare l'enregistrement dans la mémoire principale 3 et celui dans la mémoire sauvegardée 6. Si le contrôle est satisfaisant, l'enregistrement est transféré dans la zone de données 8B de la mémoire-tampon 8 puis à nouveau comparé à celui de la mémoire sauvegardée 6 pour vérifier la qualité du transfert effectué. Quand le contrôle est satisfaisant, le contrôleur 5 positionne dans la zone 8A affectée aux requêtes dans la mémoire-tampon 8, le nombre approprié V rendent compte de l'exécution (V=1 dans le cas favorable), ainsi que le sémaphore "exécution terminée" et il enlève le sémaphore "exécution en cours".

### Mode ré-indexation des fichiers enregistrés

Cette opération permet de gérer le fichier en mode "tournant" c'est-à-dire que les nouveaux enregistrements viennent prendre physiquement la place des plus anciens, les unités de mémorisation 3, 4 sont généralement du type où l'effacement des données s'effectue par blocs B₁...Bₙ dont la taille dépend de celle du support tout entier, l'un des blocs B₀ étant dévolu à un bloc logiciel de commande dit "système".

Dans ce cas, si on procède à un effacement d'un bloc de fichier (Bᵢ par exemple Fig. 2), on ré-indexe le fichier. Les pointeurs de début de fichier sont positionnés sur les premiers enregistrements du bloc suivant (Bᵢ₊₁) et les pointeurs de fin de fichier, sur le début du premier bloc préalablement effacé, affecté au fichier.

Le processeur de pilotage H positionne dans la zone 8A des requêtes de la mémoire-tampon 8 le sémaphore "écriture de requête", le sémaphore "ré-indexation" est positionné et le sémaphore "écriture de requête" est enlevé. Quand il détecte l'activation du sémaphore "ré-indexation", le contrôleur 5 positionne dans la mémoire-tampon 6, un sémaphore "exécution en cours" et efface le premier bloc Bᵢ de chacune des deux unités 3, 4 de mémorisation puis il réorganise comme indiqué précédemment, les pointeurs correspondants dans la mémoire sauvegardée 6. Le contrôleur positionne ensuite dans la zone des requêtes 8A de la mémoire-tampon 8, le nombre V rendant compte de l'exécution (V=1 dans le cas favorable), le sémaphore "exécution terminée" et désactive le sémaphore "exécution en cours".

### Changement de support

Cette opération consiste en une ré-initialisation complète des moyens de mémorisation. Elle n'est soumise à aucun contrôle dans la version avec support de mémorisation principal 3 inamovible. Par contre, dans la version où ce support 3 est amovible, le dispositif vérifie qu'il est vierge.

Le processeur de pilotage H positionne dans la zone 8A des requêtes de la mémoire 8 le sémaphore "écriture de requête" et dans la zone de données 8B de cette même mémoire, les différentes informations nécessaires à l'identification et aux contrôles telles que :
- la date et l'heure
- l'identification de l'hôte,
- le nom du fichier des enregistrements, et
- la taille du support.

Lorsque les données sont transférées, le sémaphore "formatage" est activé et le sémaphore "écriture des requêtes", désactivé.

Quand le contrôleur 5 détecte l'activation du formatage, il positionne dans la mémoire-tampon 8 le sémaphore "exécution en cours", il transfère les données de la zone 8B de cette mémorisation dans la mémoire sauvegardée 6 et il compare une à une les données de cette mémoire-tampon 8 avec celles de la mémoire sauvegardée 6, pour vérifier la bonne exécution du transfert. Si le contrôle est satisfaisant, le contrôleur 5 vérifie que les deux unités de stockage 3, 4 sont bien présentes, que leur taille est bien compatible avec la taille de support spécifiée dans la requête, et que l'unité principale est bien vierge dans le cas où elle est amovible.

Cet ensemble de données permet au contrôleur 5 de vérifier en permanence la conformité des deux unités de mémorisation 3,4 l'une par rapport à l'autre ainsi que leur dépendance par rapport à lui. Il initialise alors les pointeurs physiques et virtuels de chaque unité de mémorisation 3, 4 et les inscrit dans la mémoire sauvegardée 6, puis il inscrit dans la zone de requête 8A de la mémoire 8, la valeur V caractérisant l'exécution (V=1 comme précédemment si elle est satisfaisante), le sémaphore "exécution terminée" et enfin il désactive le sémaphore "exécution en cours".

### Défauts

Toute discordance ou défaut constaté par le contrôleur 5 au cours de l'exécution ou lors des contrôles qu'il effectue en permanence ("checksum" de la mémoire sauvegardée 6, état de la pile électrique de sauvegarde etc), est signalé au processeur de pilotage H. S'il s'agit d'un défaut constaté lors de l'exécution d'une requête, le processeur de pilotage H en a connaissance en accédant au compte-rendu d'exécution dans la mémoire-tampon 8 dès que le sémaphore "exécution terminée" est activé.

S'il s'agit d'un défaut constaté par un contrôle interne permanent, le processeur de pilotage H en a également connaissance par le compte-rendu d'exécution mais par le biais de la détection de l'état d'activation du sémaphore "alarme contrôleur".

### Compte-rendu d'exécution

C'est toujours la valeur V du dernier compte-rendu qui est inscrite dans la zone 8A de la mémoire-tampon 8. Cette valeur est remise à zéro au début de chaque nouvelle requête du processeur de pilotage H. Comme on l'a vu déjà, un compte-rendu favorable est traduit par une valeur positive non nulle V (V=1 par exemple).

D'autres valeurs sont affectées à des situations particulières non considérées comme défectueuses (V=2 en lecture signifie par exemple que tout est correct mais que l'enregistrement recherché n'existe pas). On affecte au symbole V une valeur négative en cas de défaut. Les valeurs -1, -2 etc (FF, FE etc, en hexadécimal) sont associés à des défauts dans les requêtes (sémaphore "exécution terminée"), les valeurs -127, -126 etc (80, 81 etc en hexadécimal) pour les défauts internes à contrôleur 5 (sémaphore "alarme contrôleur").

### Enregistrements validés/enregistrements invalidés

Si le contrôleur 5 constate, suite à une requête d'écriture émise par le processeur de pilotage, une discordance entre l'enregistrement en mémoire sauvegardée 6 et celui correspondant dans l'unité de stockage 3 et/ou 4, il invalide cet enregistrement et une nouvelle tentative est effectuée. Après trois tentatives infructueuses, le contrôleur 5 délivre un compte-rendu d'exécution "défaut écriture support". Le compte des enregistrements invalidés pour chaque support est constamment actualisé dans la mémoire sauvegardée 6 pour examen lors d'opérations de maintenance.

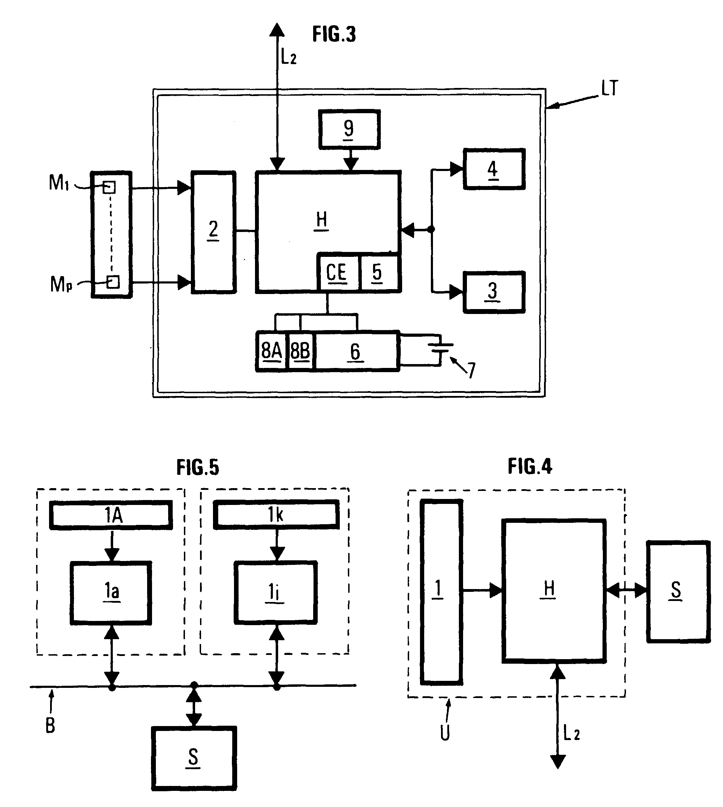

Suivant la variante de la Fig. 3, le contrôleur 5 est inclus dans le processeur de pilotage H. Les mémoires 6 et 8 sont disposées par exemple sur un même support de mémorisation. L'ensemble LT constitué du processeur de pilotage H, des différentes mémoires du module local S et de l'élément d'acquisition 2, est disposé dans un même lieu (un local technique par exemple) et il est relié à chaque ensemble de mesure 1. Dans ce cas, le contrôleur 5 communique directement avec les moyens de mémorisation 3, 4 d'une part, et 6, 8 d'autre part, de l'ensemble S par l'intermédiaire de l'élément CE).

Ce mode de réalisation convient particulièrement si l'on dispose d'un processeur suffisamment puissant pour réaliser toutes les fonctions dévolues au processeur de pilotage H et au module de mémorisation S et précédemment décrites. Dans un tel cas, les échanges précédents (requêtes et compte-rendus) entre les éléments H et S sont remplacés par des échanges entre tâches exécutées par le processeur unique.

Suivant le mode de réalisation de la Fig. 4, on associe un processeur de pilotage H à chaque ensemble de mesure 1 de façon à constituer des unités de mesure à gestion autonome U. Un module de mémorisation sécurisée particulier S est associé à chaque unité ainsi constituée.

On peut encore (Fig.5) mémoriser sur un module de mémorisation commun S toutes les données acquises parallèlement par plusieurs de ces unités U1 ... Uk par l'intermédiaire d'un bus commun local B.

Le dispositif selon l'invention a été décrit dans une application à des stations de desserte pour véhicules routiers, pour navires, pour oléoducs etc. On ne sortirait pas du cadre de l'invention toutefois, en incorporant le dispositif avec ses moyens de mémorisation sécurisés, dans les distributeurs de carburant des stations-service, de façon à les rendre autonomes et aptes à conserver et à restituer à la demande toutes les données successive de distribution.

## Revendications

1. Méthode pour simplifier la saisie et la gestion de données transactionnelles élaborées à partir de mesures faites par des moyens de mesurage (M1 à Mp), caractérisée en ce qu'elle comporte la mémorisation locale sécurisée des mesures par adjonction locale aux moyens de mesurage, d'au moins un ensemble local de traitement comportant un processeur de pilotage (H), des moyens de stockage comprenant plusieurs unités locales de mémorisation (3,4,6,8) et des moyens de contrôle (5) adaptés à gérer sur commande du processeur de pilotage (H), la mémorisation de valeurs de mesure validées, et à contrôler des échanges de données entre les différentes unités locales de mémorisation, de façon à concentrer en un même lieu l'ensemble des moyens nécessaires à l'acquisition et la mémorisation sécurisée des données transactionnelles.

2. Méthode selon la revendication précédente, caractérisée en ce qu'elle comporte le transfert à distance des données mémorisées et sécurisées, sur requête de moyens de gestion desdites transactions.

3. Méthode selon la revendication précédente, caractérisée en ce que la mémorisation sécurisée des données transactionnelles comporte la duplication de ces données par les moyens de stockage et des contrôles d'échange entre les différentes unités locales de mémorisation.

4. Méthode selon la revendication 1 ou 2, caractérisée en ce qu'elle comporte la mise en communication du processeur de pilotage (H) avec les moyens de contrôle (5) par l'intermédiaire d'une voie de transmission sécurisée (L1).

5. Méthode selon la revendication précédente, caractérisée en ce que l'on associe directement le processeur de pilotage (H) et les moyens de contrôle (5).

6. Dispositif pour simplifier la saisie et la gestion de données transactionnelles élaborées à partir de mesures faites par des moyens de mesurage (1), caractérisé en ce qu'il comporte au moins un ensemble local de traitement associé directement aux moyens de mesurage (1) et constitué d'au moins un processeur de pilotage (H) comportant des moyens d'acquisition et de validation des données mesurées, et d'au moins un module local (S) de mémorisation des données validées qui comprend plusieurs unités de mémorisation (3,4,6,8) et des moyens de contrôle (5) qui sont adaptés, sur commande du processeur de pilotage (H), à piloter la mémorisation de valeurs de mesure validées, et à contrôler les échanges de données entre les différentes unités locales de mémorisation, de façon que les valeurs accessibles librement depuis l'extérieur du dispositif de traitement lors d'une lecture dudit au moins un module local de mémorisation, soient conformes aux valeurs effectivement mesurées.

7. Dispositif selon la revendication 6, caractérisé en ce que chaque module de mémorisation (S) comporte une première et une deuxième unité de stockage (3, 4), les moyens de contrôle (5) étant adaptés à commander la mémorisation de valeurs de mesure validées dans la première unité de stockage (3) et pour dupliquer lesdites valeurs dans la deuxième unité de stockage (4), une mémoire sauvegardée (6) pour mémoriser tout échange en cours entre les moyens de contrôle (5) et le processeur de pilotage (H) et une mémoire-tampon (8) pour les échanges entre le processeur de pilotage (H) et le module de mémorisation (S), lesdits moyens de contrôle (5) étant adaptés à contrôler des transferts de données entre les différentes unités de mémorisation.

8. Dispositif selon la revendication précédente, caractérisé en ce que la mémoire-tampon (8) comporte une première zone (8A) pour l'écriture de requêtes émanant du processeur de pilotage (H) et des compte-rendus d'exécution émanant des moyens de contrôle (5), et une deuxième zone (8B) pour l'écriture de données échangées entre le processeur de pilotage (H) et lesdits moyens de contrôle (5)

9. Dispositif selon l'une des revendications 6 à 8, caractérisé en ce qu'il comporte des moyens (9) pour tester le bon fonctionnement d'une source d'alimentation extérieure (A) et des moyens de contrôle (5).

10. Dispositif selon l'une des revendications 7 à 9, la combinaison de revendications résultante comprenant la revendication 7, caractérisé en ce que les deux unités de stockage (3,4) sont des mémoires de type statique non volatiles.

11. Dispositif selon l'une des revendications 7 à 10, la combinaison de revendications résultante comprenant la revendication 7, caractérisé en ce que la deuxième unité de stockage (4) est une mémoire de duplication des données dans la première unité de stockage (3), les moyens de contrôle (5) étant adaptés à contrôler que les données validées dans les deux unités de stockage sont identiques..

12. Dispositif selon l'une des revendications 7 à 11, la combinaison de revendications résultante comprenant la revendication 7, caractérisé en ce qu'il comporte, dans la mémoire sauvegardée (6), des données néccessaires pour contrôler les unités de stockage (3, 4).

13. Dispositif selon l'une des revendications 6 à 12, caractérisé en ce que les moyens de contrôle (5) sont reliés au processeur de pilotage par une voie de liaison (L1) sécurisée.

14. Dispositif selon l'une des revendications 6 à 13, caractérisé en ce que les moyens de contrôle (5) sont disposés dans le processeur de pilotage (H).

15. Dispositif selon l'une des revendications 7 à 14, la combinaison de revendications résultante comprenant la revendication 7, caractérisé en ce que le processeur de pilotage (H) est disposé à proximité de la mémoire-tampon (8).

16. Dispositif selon l'une des revendications 6 à 15, caractérisé en ce qu'il comporte plusieurs processeurs de pilotage (H) associés respectivement à plusieurs ensembles de mesurage (1) et partageant au moins un module de mémorisation (S).

17. Dispositif selon l'une des revendications 6 à 16, caractérisé en ce qu'il comporte une voie de transmission (L2) pour la connexion à distance à un ensemble de gestion des données transactionnelles.

18. Méthode pour simplifier la saisie et la gestion de données relatives à des livraisons de fluides dans des stations de desserte, ces données étant élaborées à partir de mesures faites par des moyens de mesurage (M1 à Mp) de volumes transférés, caractérisée en ce qu'elle comporte :
- la mémorisation locale sécurisée des données par adjonction locale aux moyens de mesurage, d'au moins un ensemble local de traitement comportant un processeur de pilotage (H), des moyens de stockage comprenant plusieurs unités de mémorisation (3, 4, 6, 8) et des moyens de contrôle (5) adaptés à gérer sur commande du processeur de pilotage (H), la mémorisation de valeurs de mesure validées, et à contrôler des transferts de données entre les différentes unités de mémorisation, de façon à concentrer en un même lieu l'ensemble des moyens néccessaires à la sécurisation des données transactionnelles; et
- le transfert à distance des données mémorisées sur requête de moyens extérieurs de gestion desdites transactions.

## Patentansprüche

1. Verfahren zum Vereinfachen der Erfassung und der Verwaltung von Transaktionsdaten, die ausgehend von durch Meßmittel (Ml bis Mp) ausgeführten Messungen verarbeitet werden,
dadurch gekennzeichnet,
daß es die gesicherte lokale Speicherung der Messungen durch lokales Zuordnen zu den Meßmitteln wenigstens einer lokalen Verarbeitungsanordnung umfaßt, die einen Steuerprozessor (H), mehrere lokale Speichereinheiten (3, 4, 6, 8) enthaltende Speichermittel und Kontrollmittel (5) aufweist, die zur Leitung der Speicherung von validierten Meßwerten auf Befehl des Steuerprozessors (H) und zur Kontrolle des Austausches von Daten zwischen den verschiedenen lokalen Speichereinheiten ausgelegt sind, um an einer gleichen Stelle die Gruppe der zur Erfassung notwendigen Mittel und die gesicherte Speicherung der Transaktionsdaten zu konzentrieren.

2. Verfahren nach dem vorhergehenden Anspruch,
dadurch gekennzeichnet,
daß es die Fernübertragung der gespeicherten und gesicherten Daten auf Verlangen der Mittel zur Verwaltung dieser Transaktionen umfaßt.

3. Verfahren nach dem vorhergehenden Anspruch,
dadurch gekennzeichnet,
daß die gesicherte Speicherung der Transaktionsdaten die Duplizierung dieser Daten durch die Speichermittel und Austauschkontrollen zwischen den verschiedenen lokalen Speichereinheiten umfaßt.

4. Verfahren nach Anspruch 1 oder 2,
dadurch gekennzeichnet,
daß es die Verbindungsausführung des Steuerprozessors (H) mit den Kontrollmitteln (5) über einen gesicherten Übertragungsweg (L1) umfaßt.

5. Verfahren nach dem vorhergehenden Anspruch,
dadurch gekennzeichnet,
daß der Steuerprozessor (H) und die Kontrollmittel (5) direkt verbunden werden.

6. Einrichtung zum Vereinfachen der Erfassung und der Verwaltung von Transaktionsdaten, die ausgehend von durch Meßmittel (1) ausgeführten Messungen verarbeitet werden,
dadurch gekennzeichnet,
daß sie wenigstens eine lokale Verarbeitungsanordnung, die direkt mit den Meßmitteln (1) verbunden ist und aus mindestens einem mit Mitteln zur Erfassung und zur Validierung der gemessenen Daten versehenen Steuerprozessor (H) besteht, und wenigstens einen lokalen Modul (S) zur Speicherung der validierten Daten umfaßt, der mehrere Speichereinheiten (3, 4, 6, 8) und Kontrollmittel (5) umfaßt, die zum Steuern der Speicherung von validierten Meßwerten auf Befehl des Steuerprozessors (H) und zum Kontrollieren des Datenaustausches zwischen den verschiedenen lokalen Speichereinheiten ausgelegt sind, so daß die von außen frei zugänglichen Werte der Verarbeitungseinrichtung beim Lesen wenigstens eines lokalen Speichermoduls den tatsächlich gemessenen Werten entsprechen.

7. Einrichtung nach Anspruch 6,
dadurch gekennzeichnet,
daß jeder Speichermodul (S) eine erste und eine zweite Speichereinheit (3, 4), wobei die Kontrollmittel (5) zur Steuerung der Speicherung von validierten Meßwerten in der ersten Speichereinheit (3) und zum Duplizieren dieser Werte in die zweite Speichereinheit (4) ausgelegt sind, einen Sicherungsspeicher (6) zur Speicherung jedes ablaufenden Austausches zwischen den Kontrollmitteln (5) und dem Steuerprozessor (H) und einen Pufferspeicher (8) für den Austausch zwischen dem Steuerprozessor (H) und dem Speichermodul (S) umfaßt, wobei die Kontrollmittel (5) zum Kontrollieren der Datenübertragungen zwischen den verschiedenen Speichereinheiten ausgelegt sind.

8. Einrichtung nach dem vorhergehenden Anspruch,
dadurch gekennzeichnet,
daß der Pufferspeicher (8) eine erste Zone (8A) zum Einschreiben von vom Steuerprozessor (H) ausgehenden Forderungen und der von den Kontrollmitteln ausgehenden Ausführungsmeldungen und eine zweite Zone (8B) zum Einschreiben von zwischen dem Steuerprozessor (H) und den Kontrollmitteln (5) ausgetauschten Daten aufweist.

9. Einrichtung nach einem der Ansprüche 6 bis 8,
dadurch gekennzeichnet,
daß sie Mittel (9) zum Prüfen des einwandfreien Arbeitens einer äußeren Versorgungsquelle (A) und der Kontrollmittel (5) aufweist.

10. Einrichtung nach einem der Ansprüche 7 bis 9, wobei die sich ergebende Anspruchskombination den Anspruch 7 umfaßt,
dadurch gekennzeichnet,
daß die beiden Speichereinheiten (3, 4) Speicher vom statischen nichtflüchtigen Typ sind.

11. Einrichtung nach einem der Ansprüche 7 bis 10, wobei die sich ergebende Anspruchskombination den Anspruch 7 umfaßt,
dadurch gekennzeichnet,
daß die zweite Speichereinheit (4) ein Speicher zum Duplizieren der Daten in der ersten Speichereinheit (3) ist, wobei die Kontrollmittel (5) zum Kontrollieren ausgelegt sind, dahingehend, daß die validierten Daten in den beiden Speichereinheiten identisch sind.

12. Einrichtung nach einem der Ansprüche 7 bis 11, wobei die sich ergebende Anspruchskombination den Anspruch 7 umfaßt,
dadurch gekennzeichnet,
daß sie im Sicherungsspeicher (6) zum Kontrollieren der Speichereinheiten (3, 4) notwendige Daten enthält.

13. Einrichtung nach einem der Ansprüche 6 bis 12,
dadurch gekennzeichnet,
daß die Kontrollmittel (5) mit dem Steuerprozessor über einen gesicherten Verbindungsweg (L1) verbunden sind.

14. Einrichtung nach einem der Ansprüche 6 bis 13,
dadurch gekennzeichnet,
daß die Kontrollmittel (5) im Steuerprozessor (H) angeordnet sind.

15. Einrichtung nach einem der Ansprüche 7 bis 14, wobei die sich ergebende Anspruchskombination den Anspruch 7 umfaßt,
dadurch gekennzeichnet,
daß der Steuerprozessor (H) nahe beim Pufferspeicher (6) angeordnet ist.

16. Einrichtung nach einem der Ansprüche 6 bis 15,
dadurch gekennzeichnet,
daß sie mehrere Steuerprozessoren (H) enthält, die jeweils mit mehreren Meßanordnungen (1) verbunden sind und mindestens einen Speichermodul (S) gemeinsam benutzen.

17. Einrichtung nach einem der Ansprüche 6 bis 16,
dadurch gekennzeichnet,
daß sie einen Übertragungsweg (L2) zum Fernanschluß an eine Anordnung zur Verwaltung der Transaktionsdaten umfaßt.

18. Verfahren zum Vereinfachen der Erfassung und der Verwaltung von im Zusammenhang mit Lieferungen von Flüssigkeiten in Umschlagplätzen stehenden Daten, wobei diese Daten ausgehend von durch Mittel (M1 bis Mp) zur Messung von transferierten Mengen ausgeführten Messungen verarbeitet werden,
dadurch gekennzeichnet,
daß es umfaßt:
- die gesicherte lokale Speicherung von Daten durch lokales Zuordnen zu den Meßmitteln wenigstens einer lokalen Verarbeitungseinheit, die einen Steuerprozessor (H), mehrere Speichereinheiten (3, 4, 6, 8) enthaltende Speichermittel und Kontrollmittel (5) aufweist, die zur Leitung der Speicherung von validierten Meßwerten auf Befehl des Steuerprozessors (H) und zum Kontrollieren der Datentransfers zwischen den verschiedenen Speichereinheiten ausgelegt sind, um an einer gleichen Stelle die Gruppe der bei der Sicherung der Transaktionsdaten notwendigen Mittel zu konzentrieren; und
- die Fernübertragung der gespeicherten Daten auf Verlangen äußerer Mittel zur Verwaltung der Transaktionen.

## Claims

1. A method of simplifying the acquisition and management of transaction data derived from measurements taken by measuring means (M1 to Mp), characterised in that it incorporates security-protected local storage of measurements by providing locally, in addition to the measuring means, at least one local processing unit consisting of a control processor (H), storage means with several local storage units (3, 4, 6, 8) and control means (5) set up so as to respond to commands from the control processor (H) to manage storage of validated measurement values and control data transfers between the different local storage units so that all the means needed to acquire and provide security-protected storage for transaction data can be concentrated on a single site.

2. A method as claimed in the preceding claim, characterised in that it incorporates the remote transfer of security-protected stored data when requested by means for managing said transactions.

3. A method as claimed in the preceding claim, characterised in that the secure storage of transaction data includes copying these data by the storage means and controls applied to data exchanges between the various local storage units.

4. A method as claimed in claim 1 or 2, characterised in that it includes connecting the control processor (H) to the control means (5) via a secure transmission line (L1).

5. A method as claimed in the preceding claim, characterised in that the control processor (H) and the control means (5) are directly linked.

6. A device for simplifying the acquisition and management of transaction data derived from measurements taken by measuring units (1), characterised in that it has at least one local processing system directly connected to the measuring means (1) and consisting of at least one control processor (H) with means for acquiring and validating the measurement data and at least one local module (S) for storing the validated data which has several storage units (3, 4, 6, 8) and control means (5) programmed to respond to commands from the control processor (H) to control the storage of validated measurement values and control data transfers between the various local storage units in order to ensure that the values freely accessible from outside the processing device when the at least one local storage module is being read are the same as the values actually measured.

7. A device as claimed in claim 6, characterised in that each storage module (S) has a first and a second storage unit (3, 4), control means (5) set up to control the storage of validated measurement values in the first storage unit (3) and to copy said values into the second storage unit (4), a backing storage (6) for storing any transfer in progress between the control means (5) and the control processor (H) and a buffer memory (8) for transfers between the control processor (H) and the storage module (S), said control means (5) being set up to control data transfers between the different storage units.

8. A device as claimed in the preceding claim, characterised in that the buffer memory (8) has a first zone (8A) for writing queries from the control processor (H) and execution reports from the control means (5) and a second zone (8B) for writing data exchanged between the control processor (H) and said control means (5).

9. A device as claimed in one of claims 6 to 8, characterised in that it has means (9) for testing that an external power supply source (A) and control means (5) are operating correctly.

10. A device as claimed in one of claims 7 to 9, the resulting combination of claims including claim 7, characterised in that the two storage units (3, 4) are memories of the non-volatile, static type.

11. A device as claimed in one of claims 7 to 10, the resulting combination of claims including claim 7, characterised in that the second storage unit (4) is a memory for copying the data from the first storage unit (3), the control means (5) being set up to check that the validated data in the two storage units are identical.

12. A device as claimed in one of claims 7 to 11, the resulting combination of claims including claim 7, characterised in that the requisite data for controlling the storage units (3, 4) is in the backing storage (6).

13. A device as claimed in one of claims 6 to 12, characterised in that the control means (5) are connected to the control processor by a secure linking channel (L1).

14. A device as claimed in one of claims 6 to 13, characterised in that the control means (5) are arranged in the control processor (H).

15. A device as claimed in one of claims 7 to 14, the resulting combination of claims including claim 7, characterised in that the control processor (H) is arranged in the proximity of the buffer memory (8).

16. A device as claimed in one of claims 6 to 15, characterised in that it has several control processors (H) linked respectively to several measuring units (1) and sharing at least one storage module (S).

17. A device as claimed in one of claims 6 to 16, characterised in that it has a transmission channel (L2) for providing remote connection to a management unit for transaction data.

18. A method of simplifying the acquisition and management of data relating to the delivery of fluids at service terminals, these data being derived from measurements taken by means for measuring (Ml to Mp) transferred volumes, characterised in that it includes:
- security protected local storage for the data provided by adding to the local measuring means at least one local processing unit having a control processor (H), storage means comprising several storage units (3, 4, 6, 8) and control means (5) set up to manage, in response to a command from the control processor (H), the storage of validated measurement values and control data transfers between the various storage units so that all the means needed to ensure that the transaction data are secure can be concentrated on a single site; and
- the remote transfer of the stored data when requested by external means for managing said transactions.
